# EUROPEAN PATENT SPECIFICATION

(11) **EP 0 410 966 B1**
(45) Date of publication and mention of the grant of the patent: **08.03.1995**
(21) Application number: 89901518.4
(22) Date of filing: 30.01.1989
(51) Int. Cl.: H05B 41/29, H02M 7/04

(54) **SOLID STATE ELECTRONIC BALLAST**
MONOLITHISCHER, ELEKTRONISCHER BALLAST
BALLAST ELECTRONIQUE MONOLITHIQUE

(43) Date of publication of application: 06.02.1991
(73) Proprietor: FLOTRONIC TECHNOLOGY (1989) PTE. LTD., Singapore 0821 (SG)
(72) Inventor: SKALAK, Peter, Gregory, Singapore 2159 (SG); TEO, Willie, Chin, Kiang, D-1000 Berlin 30 (DE)
(74) Representative: Feldmann, Clarence Paul
(86) International application number: EP8801211
(87) International publication number: WO9009087

(56) References cited:
- EP-A- 239 793
- WO-A-87/01552
- US-A- 4 461 980

## Description

### Solid State Electronic Ballast

### Background and Summary of the Invention

Since their introduction in 1938, fluorescent lamps have largely replaced incandescent lamps as the preferred lighting system for public buildings such as schools, offices, factories etc as well as in many homes. Since the early 1950's, sales of fluorescent lamps have overtaken that of incandescent lamps in most industrialized countries.

A fluorescent lamp consists of a glass tube containing a small amount of mercury and a chemically inert gas at low pressure, usually argon or krypton. Each end of the tube has an electrode which is a coil of tungsten wire with a coating of rare earth oxide. A ferro-magnetic ballast, power factor condenser and starter together with the metal housing, two tube holders, one starter holder and wiring system complete the lamp fixture.

Over the past 50 years the three significant areas of improvements to this system have been:
(1) Switch from a pre-heat starter to a rapid starter.
(2) Introduction of a warm light as an alternative to the cool light which has helped somewhat to enhance its aesthetic qualities in certain applications.
(3) Availability of a low loss ferro-magnetic ballast which has succeeded in replacing about 5-10% of the conventional ballast market.

A fluorescent lamp requires an element which will initially provide the breakdown voltage and thereafter limit the current through the lamp. This element is called a ballast and could be constructed with an inductor and a switch. A more sophisticated circuit is constructed by using active elements. The simple ballast is not very expensive but produces a low efficiency of energy transfer. The sophisticated ballast is usually expensive, not very reliable, and liable of producing electromagnetic interferences.

Solid state electronic ballasts are well known in the art. US-4,689,524 (Ureche) shows an electronic fluorescent lamp ballast with a self-adjusting frequency of operation as a function of lamp impedance variations due to age and enables constant ionization within the fluorescent lamp. This is achieved by an energy storing component, a controlling component which has two states and two socket elements. They enable the filaments of the fluorescent lamp to be connected in series with the energy storing component. A constant current flows through a portion of the energy storing component when the controlling component is in a state of producing an "energy latching" effect which will enable the ballast to achieve a very high energy transfer.

In EP 247,529 (Kim) an electronic ballast stabilizer is shown comprising a noise reduction transformer and two capacitors for regulating AC input voltage. A bridge rectifier changes the AC input into DC voltage. A noise reduction circuit comprises a resistor and a capacitor through which plus voltage passes at the time of voltage drop. The positive voltage also passes through a resistor and a diode and is applied to the emitters of two switching transistors. The positive voltage also passes through the bases of two resistors.

A minus voltage passes through voltage regulating coils, is applied to a collector of constant current transistor and through series and parallel circuit comprising resistors, capacitors and diode. A coil is connected between the secondary coils of a chopper transformer coupled through noise reduction coils to filaments of fluorescent lamps respectively. This eliminates disturbing influence on the human eye because the intensity of light is constant.

WO-A-8701552 (EBTEK) shows an electronic ballast circuit with a current divider in the power supply. So it works with two halve wave direct currents. Behind this current divider it is necessary to handle the positive and the negative sides of the circuit separately. So EBTEK has to use all elements twice, once for the positive and once for the negative side. This is also necessary for all the functional elements which are needed to control a fluorescent lamp.

EP-0 326 114-A1 (Tokyo Electric), published on 2.8.89 and thus constituting an intermediate publication according to Article 54(3) EPC, shows an electronic ballast circuit comprising a full-wave rectifier with a filtering device, a start-up device and a resonant circuit. The resonant circuit is based on an inverter circuit. A resonance current restriction is made by inserting one transistorized circuit for each side of the resonant inverter switching means.

It is one of the objects of this invention to provide an electronic ballast that replaces the three main components of a traditional fluorescent lamp ballast, namely the ferro-magnetic ballast, the power factor condenser, the starter and starter holder. It is a further object of the invention to minimize third and higher order harmonic distortions of the line current. Another object of the invention is to eliminate start-up flicker which is one of the major draw-backs of the fluorescent system. Still another object of the invention is to save weight and costs.

The objects of the invention are achieved by the ballast of claim 1.

### BRIEF DESCRIPTION OF THE DRAWINGS.

- Fig. 1: is a functional block diagram of the present invention;
- Fig. 2: illustrates a power conversion circuit;
- Fig. 3: shows the waveform generated by the bridge circuit in the power conversion circuit;
- Fig. 4: shows the waveform generated by the low harmonic filter section in the power conversion circuit;
- Fig. 5: illustrates the start-up circuit that is downstream-connected to the power conversion circuit;
- Fig. 6: illustrates the switching resonant circuit that is downstream-connected to the start-up circuit of fig. 5;

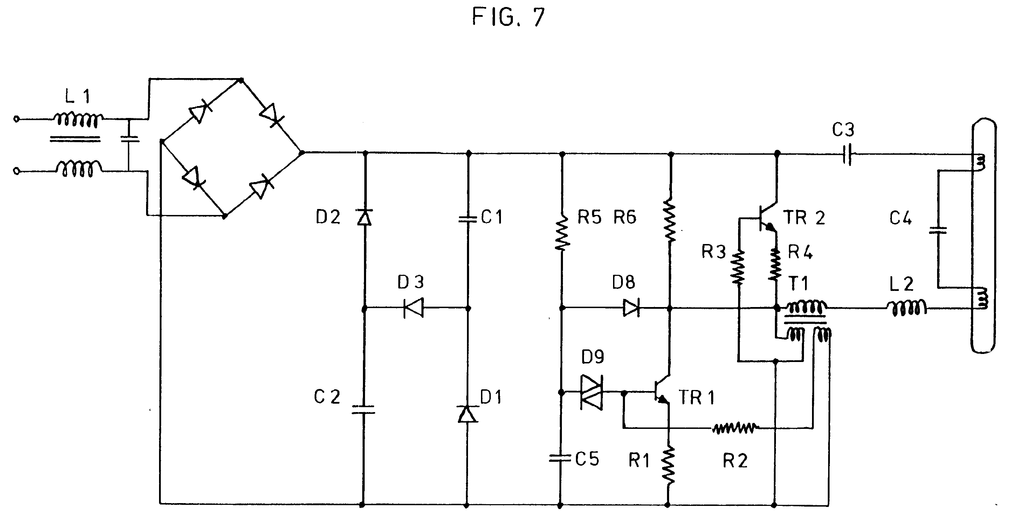

- Fig. 7: shows the complete scheme of the solid state electronic ballast.

### Detailed Description of the Preferred Embodiment

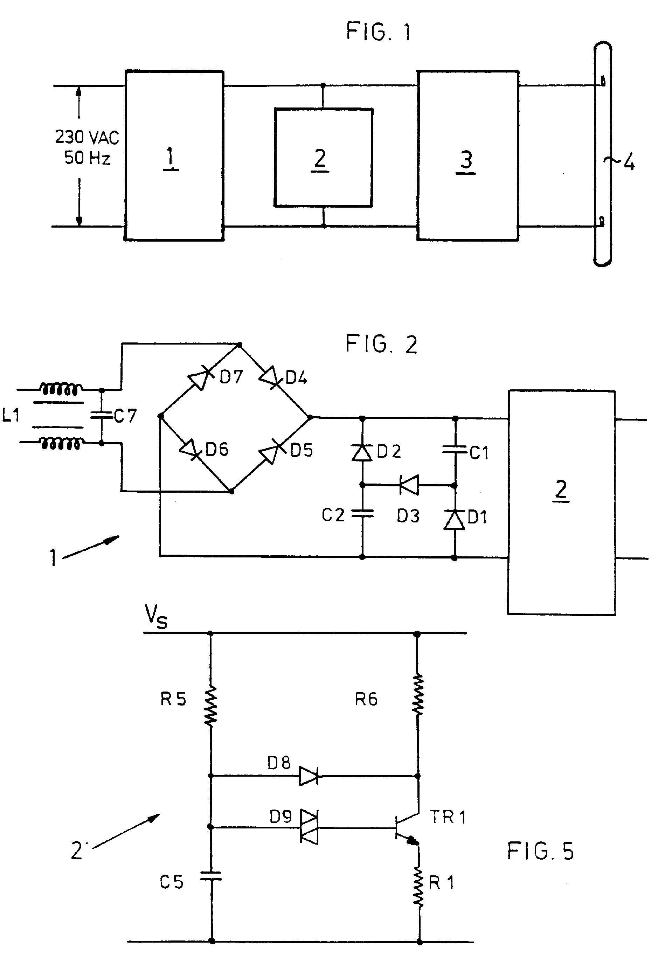

Generally an electronic ballast operates as an on/off switch alternating the voltage of the fluorescent lamp. The basic principle of the solid state electronic ballast of the invention is to convert the 50 Hz 230 V AC mains into an AC voltage at a much higher frequency (approx. 30-40 KHz) to operate the fluorescent lamp. The ballast circuit is composed of three basic function blocks. These are namely:
a power supply conversion circuit 1
a start-up circuit 2 and
a switching resonant circuit 3,
connected to the fluorescent lamp 4. All three circuits are downstream-connected as shown in fig. 1.

The primary role of the power supply circuit 1 is to convert the AC mains power into a varying DC supply voltage for the operation of the fluorescent lamp circuit. The variation of this DC voltage is designed in a manner to minimize the third harmonic distortion of the line current. Fig. 2 shows the details of the circuit. The inductor L1 and the capacitor C7 form a common mode line filter to provide isolation and prevent the high frequency currents of the ballast circuit from being coupled back to the mains supply.

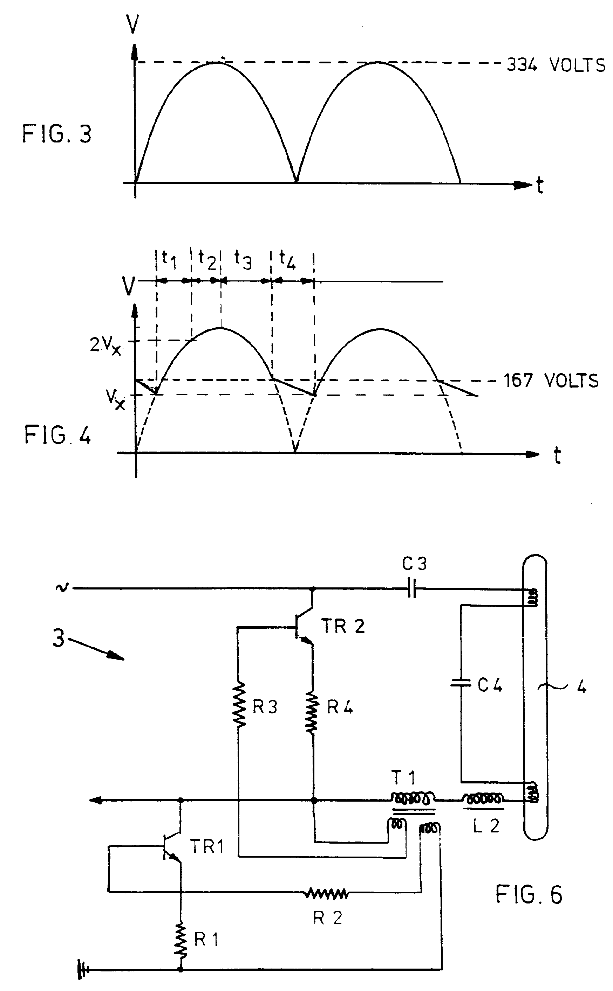

The bridge circuit, consisting of diodes D4 and D7, rectifies the mains supply into a full wave rectified voltage which is a positive sinusoidal varying voltage (fig. 3).

If a single capacitor is used to filter the above voltage, a high DC voltage with a low ripple voltage is achieved. However, the consequence is to have high and short current pulses charging the filter capacitor, resulting in unacceptable levels of third and higher order harmonic distortions to the line current. The design of the filter section is to avoid short and sharp line current pulses. Components D1, D2, D3, C1 and C2 constitute an improved low harmonic filter section (fig. 2) resulting in a filtered voltage with a waveform as shown in fig. 4.

The operation of the filter circuit is explained as follows:

The bridge circuit conducts over the period of t1, t2 and t3. During this period, power to the lamp circuit is drawn directly from the mains supply. During the period t2, the bridge conducts additional currents to charge the filter capacitors C1 and C2.

During the period t1, the rectified voltage exceeds the capacitor voltages of C1 and C2. All diodes D1, D2 and D3 are reversed biased and the capacitors C1 and C2 are prevented from charging.

In the beginning of the period t2, the rectified voltage now exceeds the total of voltages of the capacitors C1 and C2. Diode D3 is forward biased and connects the capacitors C1 and C2 in series for charging. The capacitors are charged to a maximum of 167 volts (approx.) each at the end of period t2. After this, diode D3 is reversed biased again and disconnects the capacitors C1 and C2.

When the rectified voltage falls below 167 volts, diodes D1 and D2 are forward biased thereby connecting both capacitors C1 and C2 in parallel. Hence, over the period t4, energy to the lamp circuit is provided by the two capacitors C1 and C2. The voltages of the capacitors discharge until they equal the rectified voltage.

Downstream of the power supply conversion circuit 1, the start-up circuit 2 is connected. The role of the start-up circuit is to initiate the oscillation of the switching resonant circuit. This circuit operates during the initial power-on of the ballast. Once the switching resonance circuit is in operation, this circuit is deactivated. The circuit operates again in the event that the lamp is removed. Hence, the resonant circuit will be energized immediately when the lamp is replaced.

The start-up circuit 2 is essentially a "sawtooth" oscillator. With reference to fig. 5 capacitor C5 charges toward Vs through resistor R5 linearly until it reaches 32 volts. This is the "turn on" voltage of the diac trigger, D9, which subsequently switches the transistor TR1 on. Currents are then passed through the resonant circuit. This excitation provides induced voltages at the secondary windings of the transformer T1 to sustain self-oscillations. Resistor R6 acts as a load to transistor TR1 before the resonant circuit is turned on. Diode D8 discharges capacitor C5 through transistor TR1 and prevents it from charging sufficiently to fire the diac during the normal operation of the resonant circuit.

Should the oscillations of the resonant circuit be halted, e.g. in the event of the lamp removal, transistor TR1 is turned off and capacitor C5 is allowed to charge to 32 volts to fire the diac trigger D9 again. If the resonant circuit can not be excited, the cycle repeats itself.

Downstream-connected with the start-up circuit 2 is the switching resonance circuit 3. The resonance circuit 3, illustrated in fig. 6, consists of capacitor C3, lamp load in parallel with a capacitor C4, an inductor L2, a transformer T1 and transistors TR1 and TR2. Transistors TR1 and TR2 conduct alternately and are switched by a feedback mechanism provided by the secondary windings of the transformer T1. The resonant circuit is series connected across the supply when the first transistor TR1 turns on. It is connected as a loop circuit when the second transistor TR2 turns on. Resistors R1 and R4 limit the current through the resonant circuit and may be used to manipulate the luminescence level of the fluorescent lamp. Resistors R2 and R3 limit the currents in the base circuit of the transistors. The transformer T1 may have a toroid core.

On power up, the first transistor TR1 is turned on when the diac D9 fires. The resonant circuit is connected across the power supply. The operation of the first half cycle is as follows:

Current flows through the circuit and energy is stored in the reactive components. Power to the lamp is drawn from the supply. Induced voltages on the secondary windings of the transformer T1 keep the transistor TR1 turned on and hold the second transistor TR2 off until the resonant circuit current reaches its peak and begins to fall.

The second half cycle of oscillations begins when the resonant circuit current falls. The induced voltages are reversed to turn the first transistor TR1 off and to switch the second transistor TR2 on. The resonant circuit loop is closed by the second transistor TR2 and oscillates for the next half cycle. Energy stored in the reactive component are released to the lamp. When the current reverses direction, transistor TR1 is turned on once again and the next cycle begins. In this way oscillations are self-sustaining.

Under abnormal conditions, such as a faulty lamp, an electronic shut-down mechanism is triggered. The ballast shut-down results from the saturation of the toroid core and the disability of the feedback mechanism that sustains oscillations. This is accomplished by an additional secondary winding that is shortened by an electronic device when abnormal power level is detected.

It is obvious that the novel circuit arrangement using fewer components results in lower costs and less weight per unit in comparison with a traditional electronic lamp ballast. It is found that the ballast of the invention uses 20-25% less energy than the conventional ferro-magnetic ballast and 10-12% less than a low-loss ferro-magnetic ballast.

## Claims

1. A solid state electronic ballast for a fluorescent lamp, with a power supply conversion circuit (1), a start-up circuit (2) and a switching resonant circuit (3)
characterized in that
the power supply conversion circuit (1) is comprised of a full wave rectifier (D4-D7) and a low harmonic filter consisting of a first capacitor (C1) in series with a first diode (D1) and a second capacitor (C2) in series with a second diode (D2), with a third diode (D3) linking the connecting points of the first capacitor/first diode and the second capacitor/second diode, so that
said first and second diodes (D1,D2) are reverse biased and said third diode (D3) is forward biased when the rectified voltage of the full wave rectifier (D4-D7) exceeds the total voltage of said first and second capacitors (C1,C2), whereby said capacitors (C1,C2) are then connected in series, and,
when the rectified voltage of the full wave rectifier (D4-D7) is lower than the voltage of each of said first and second capacitors (C1,C2), said third diode (D3) is reversed biased, said first and second capacitors (C1,C2) are connected in parallel and said first and second diodes (D1,D2) are forward biased, and
that said switching resonant circuit comprises two resistors (R1, R4) each connected to the emitter of one of a first and a second transistor (TR1, TR2), which resistors limit the current through said resonant circuit.

2. A solid state electronic ballast as claimed in claim 1, characterized in that the switching resonant circuit (3) further comprises an inductor (L2), a transformer (T1) and the first transistor (TR1) and the second transistor (TR2), the switching resonant circuit being connected in series with the power supply conversion circuit (1) when the first transistor (TR1) is turned on and being conncted as a loop when the second transistor (TR2) is turned on.

3. A solid state electronic ballast as claimed in claim 1, characterized in that the start-up circuit (2) comprises a diac trigger (D9) that switches the first transistor (TR1) so that current passes through the switching resonant circuit (3).

4. A solid state electronic ballast as claimed in claim 3, characterized in that the start-up circuit (2) includes a resistor (R6) that acts as a load to said first transistor (Tr1) before said resonant circuit (3) is turned on.

5. A solid state electronic ballast as claimed in claim 3, wherein said transformer of said switching resonant circuit (3) has secondary windings that are connected with said first and second transistors (TR1,TR2) keeping said first transistor (TR1) turned on and said second transistor (TR2) turned off until the current of said resonant circuit reaches its peak and begins to fall.

6. A solid state electronic ballast as claimed in claim 5 wherein the two resistors (R1,R4), each connected to the emitter of one of said first and second transistors (TR1,TR2), are controllable to manipulate the luminescence level of the fluorescent lamp.

7. A solid state electronic ballast as claimed in claim 2, wherein said core of said transformer (T1) is a toroid core.

## Patentansprüche

1. Monolithischer elektronischer Ballast für eine Leuchtstofflampe mit einem Netzstromumwandlungskreis (1), einem Startkreis (2) und einem Resonanzschaltkreis (3), dadurch gekennzeichnet, dass der Netzstrom-Umwandlungskreis einen Vollwellen-Gleichrichter (D4-D7) enthält und einen niedrig abgestimmten Filterkreis umfasst mit einem ersten Kondensator(C1) in Serie mit einer ersten Diode (D1) und einem zweiten Kondensator (C2) in Serie mit einer zweiten Diode (D2), wobei eine dritte Diode (D3) die Verbindung zwischen dem ersten Kondensator und der ersten Diode und die Verbindung zwischen dem zweiten Kondensator und der zweiten Diode miteinander verknüpft, wobei die erste und die zweite Diode (D1, D2) rückwärts und die dritte Diode (D3) vorwärts geschaltet ist, falls die vom Vollwellengleichrichter (D4-D7) gelieferte Gleichspannung höher ist als die Gesamtspannung über dem ersten und zweiten Kondensator (C1, C2), hierbei sind diese Kondensatoren (C1, C2) in Serie geschaltet und falls die gleichgerichtete Spannung des Vollwellengleichrichters (D4-D7) unter der Spannung jedes der beiden ersten und zweiten Kondensatoren (C1, C2) liegt, dass dann die dritte Diode (D3) sperrt und die beiden Kondensatoren parallel geschaltet und die ersten und zweiten Dioden (D1, D2) vorwärts gerichtet sind, und dass im Resonanzschaltkreis zwei Widerstände (R1, R4), welche je mit dem Emitter eines ersten beziehungsweise eines zweiten Transistors (TR1, TR2) verbunden sind, um den Strom durch den Resonanzschaltkreis zu begrenzen.

2. Monolithischer elektronischer Ballast nach Patentanspruch 1, dadurch gekennzeichnet, dass der Resonanzschaltkreis (3) ferner eine Induktion (L2), einen Transformator (T1) und den ersten Transistor (TR1), sowie den zweiten Transistor (TR2) enthält, wobei der Resonanzschaltkreis in Serie zum Netzstrom-Umwandlungskreis (1) geschaltet ist, wenn der erste Transistor (TR1) durchschaltet und eine Schlaufe bildet, wenn der zweite Transistor (TR2) durchschaltet.

3. Monolithischer elektronischer Ballast nach Patentanspruch 1, dadurch gekennzeichnet, dass der Startkreis (2) einen Diac-Trigger (D9) enthält, welcher den ersten Transistor (TR1) einschaltet, so dass Strom durch den Resonanzschaltkreis (3) fliesst.

4. Monolithischer elektronischer Ballast nach Patentanspruch 3, dadurch gekennzeichnet, dass der Startkreis (2) einen Widerstand (R6) enthält, welcher bis der Resonanzschaltkreis (3) eingeschaltet wird, eine Last für den ersten Transistor (TR1) darstellt.

5. Monolithischer elektronischer Ballast nach Patentanspruch 3, dadurch gekennzeichnet, dass der Transformator des Resonanzschaltkreises (3) Sekundärwicklungen aufweist, welche mit dem ersten und zweiten Transistor (TR1, TR2) verbunden sind und dafür sorgen, dass der erste Transistor (TR1) durchgeschaltet und der zweite Transistor (TR2) sperrt, bis der Strom im Resonanzschaltkreis (3) seine Spitze erreicht hat und abzusinken beginnt.

6. Monolithischer elektronischer Ballast nach Patentanspruch 5, dadurch gekennzeichnet, dass die beiden Widerstände (R1, R4), die veränderlich sind, je mit dem Emitter des ersten beziehungsweise des zweiten Transistors (TR1, TR2) verbunden sind und durch ihre Verstellung erlauben, die Helligkeit der Leuchtstofflampe zu beeinflussen.

7. Monolithischer elektronischer Ballast nach Patentanspruch 2, dadurch gekennzeichnet, dass der Transformator (T1) einen Ringkern hat.

## Revendications

1. Dispositif de protection électronique à l'état solide pour lampe fluorescente, avec un circuit de conversion d'alimentation électrique (1), un circuit de starter (2) et un circuit résonnant de commutation (3) caractérisé par le fait que le circuit de conversion d'alimentation électrique (1) est constitué par un rectifieur à double alternance (D4-D7) et par un filtre de basse harmonique constitué par un premier condensateur (C1) monté en série avec une première diode (D1) et un second condensateur (C2) monté en série avec une seconde diode (D2), avec une troisième diode (D3) qui relie les bornes du premier condensateur et de la première diode et du second condensateur et de la seconde diode, de façon à ce que la polarisation de la première diode (D1) et de la seconde diode (D2) soit inverse et de façon à ce que la polarisation de la troisième diode (D3) soit directe lorsque la tension rectifiée du rectifieur à double alternance (D4-D7) est supérieure à la tension totale du premier condensateur (C1) et du second condensateur (C2), et que de ce fait les condensateurs (C1, C2) sont alors branchés en série, et lorsque la tension rectifiée du rectifieur à double alternance (D4-D7) est inférieure à la tension du premier condensateur (C1) et à la tension du second condensateur (C2), et que la polarisation de la troisième diode (D3) est inverse, et que de ce fait le premier condensateur (C1) et le second condensateur (C2) sont alors branchés en parallèle et la polarisation de la première diode (D1) et de la seconde diode (D2) est directe et caractérisé par le fait que la commutation à circuit résonnant est constituée par deux résistances (R1, R4) chacune d'elles étant branchée à l'émetteur d'un premier transistor (TR1) et d'un second transistor (TR2), ces résistances limitant l'intensité qui traverse le circuit résonnant.

2. Dispositif de protection électronique à l'état solide selon la revendication 1, caractérisé par le fait que le circuit résonnant de commutation (3) est constitué en outre par un inducteur (L2), un transformateur (T1) et le premier transistor (TR1) et le second transistor (TR2), le circuit résonnant de commutation étant branché en série avec le circuit de conversion d'alimentation électrique (1) lorsque le premier transistor (TR1) est débloqué et connecté sous forme de boucle lorsque le second transistor est débloqué.

3. Dispositif de protection électronique à l'état solide selon la revendication 1, caractérisé par le fait que le circuit de starter (2) comprend un déclencheur diac (D9) qui commute le premier transistor (TR1) pour permettre au courant de traverser le circuit résonnant de commutation (3).

4. Dispositif de protection électronique à l'état solide selon la revendication 3, caractérisé par le fait que le circuit de starter (2) comporte une résistance (R6) qui fait office de charge du premier transistor (TR1) avant que le circuit résonnant (3) soit débloqué

5. Dispositif de protection électronique à l'état solide selon la revendication 3, dans lequel le transformateur du circuit résonnant de commutation (3) comporte des enroulements secondaires qui sont branchés sur le premier transistor (TR1) et sur le second transistor (TR2) pour maintenir bloqué le premier transistor (TR1) et maintenir débloqué le second transistor (TR2) jusqu'à ce que le courant du circuit résonnant (3) atteigne sa crête et commence à redescendre.

6. Dispositif de protection électronique à l'état solide selon la revendication 5, dans lequel les deux résistances (R1, R4) - chacune d'elles étant branchée à l'émetteur du premier et du second transistor (TR1, TR2) - sont contrôlables pour pouvoir modifier le niveau de luminescence de la lampe fluorescente.

7. Dispositif de protection électronique à l'état solide selon la revendication 2, dans lequel le noyau du transformateur (T1) est un noyau toroïdal.
